# EUROPEAN PATENT APPLICATION

(11) **EP 0 833 265 A2**
(43) Date of publication of application: **01.04.1998**
(21) Application number: 97116730.9
(22) Date of filing: 25.09.1997
(51) Int. Cl.: G06F 19/00

(54) **Electrocardiographic signal processing method and device**

(30) Priority: 27.09.1996 IT TO960792
(71) Applicant: Castelli, Adolfo, 22100 Como (IT)
(72) Inventor: Castelli, Adolfo, 22100 Como (IT)
(74) Representative: Jorio, Paolo

(57) **Abstract**

An electrocardiographic signal processing method including the steps of recording (3, 12) an electrocardiographic input signal (**e(t)**) on a magnetic tape (13) by means of a recording device (20), and reproducing (24, 26) the recorded signal by means of a reproducing device (44). The transfer functions (**H(ω)**) of the recording device (20) and the reproducing device (44) have the same pattern and proportional respective cutoff frequencies; and the magnetic tape (13) is fed, at the reproducing step, in the opposite direction to that of the recording step, so that any phase shifts introduced at the recording step in the harmonic components of the input signal correspond, at the reproducing step and for corresponding harmonic components, to phase shifts produced by the reproducing device (44) and of substantially the same absolute value and of opposite sign, so that the phase shift of the output signal is substantially zero.

## Description

The present invention relates to an electrocardiographic signal processing method and device.

Electrocardiographic signal processing methods are known to comprise a recording step in which an analog input signal from an electrocardiograph is amplified to supply a recording head with a current proportional to the intensity of the input signal and used for recording a magnetic tape.

Known processing methods also comprise a reproducing step in which the recorded magnetic tape is read by a recording head to generate an analog output signal, which is supplied to devices, possibly graphic devices, for displaying the signal.

Together, the amplifier and the recording head of known recording devices perform a transfer function (pole-zero) similar to that of a high-pass filter. More specifically, the transfer function of the recording device has a lower cutoff frequency **f**_{**T**}, normally of around 0.5 Hz, which limits the frequency response of the recording device towards the low frequencies. More specifically, the harmonic components of the input signal of a frequency close to the cutoff frequency **f**_{**T**} undergo a considerable phase shift as compared with those of a frequency much higher (e.g. a decade higher) than the cutoff frequency **f**_{**T**}; and further phase shifts are introduced when reproducing the recorded signal. As such, though the frequency content is substantially equal to that of the input signal, the output signal contains a phase shift of the harmonic components, which, though acceptable in the case of voice and/or musical recordings, is decidedly undesirable when recording electrocardiographic signals, in which a similar phase shift results in the form of the output signal differing, at times considerably, from that of the original input signal. As the form of an electrocardiographic output signal is an essential parameter by which to assess the characteristics of the cardiac muscle, such a situation is understandably harmful and to be avoided at all cost.

It is an object of the present invention to provide a method of recording and reproducing electrocardiographic signals, designed to overcome the aforementioned drawback.

According to the present invention, there is provided an electrocardiographic signal processing method of the type described in Claim 1.

According to the present invention, there is also provided an electrocardiographic signal processing device of the type described in Claim 6.

A non-limiting embodiment of the present invention will be described by way of example with reference to the accompanying drawings, in which:
Figure 1 shows, schematically, a recording device implementing the method according to the present invention;
Figure 2 shows, schematically, a reproducing device implementing the method according to the present invention.

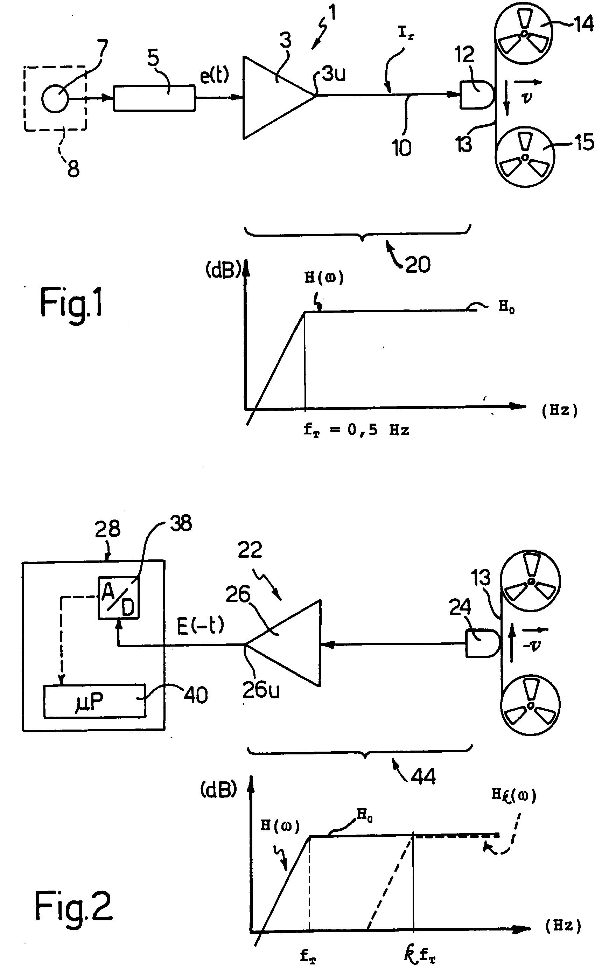

Number 1 in Figure 1 indicates a recording device comprising an amplifying circuit 3 supplied with a signal **e(t)** generated by an electrocardiograph 5 (or other device for detecting biological electric signals) having electrodes 7 applied to a portion of the human body 8 (shown schematically).

Amplifying circuit 3 comprises an output 3u communicating over a line 10 with a magnetic recording head 12 for recording a magnetic tape 13 fed at constant speed **ν** from a reel 14 to a reel 15.

The group 20 comprising amplifying circuit 3 and recording head 12 performs a high-pass (pole-zero) transfer function **H(ω)** of a substantially constant value **H**_{**0**} above a cutoff frequency **f**_{**T**}, and of a value decreasing steadily by 20 decibels per decade from cutoff frequency **f**_{**T**} towards the lower frequencies. In the embodiment shown, cutoff frequency **f**_{**T**} equals 0.5 Hz.

Number 22 in Figure 2 indicates a reproducing device cooperating with recording device 1 according to the present invention, and which comprises a reading head 24 for reading the magnetic tape 13 recorded by recording device 1. More specifically, in the course of the reading operations performed by device 22, tape 13 is fed, with respect to head 24, at constant speed **-ν** and in the opposite direction to the recording direction. Reading head 24 also communicates with the input of an amplifying circuit 26 having an output 26u communicating with the input of a data processing device 28, e.g. a personal computer, comprising an input signal analog/digital converter 38 and a microprocessor circuit 40.

The group 44 comprising amplifying circuit 26 and reading head 24 performs a high-pass (pole-zero) transfer function **H(ω)** of a substantially constant value **H**_{**0**} above a cutoff frequency **f**_{**T**}, and of a value decreasing steadily by 20 decibels per decade from cutoff frequency **f**_{**T**} towards the lower frequencies. In the embodiment shown, cutoff frequency **f**_{**T**} equals 0.5 Hz.

In actual use, the biological electric signals at electrodes 7 are processed (in known manner) by electrocardiograph 5 and supplied (electrocardiographic signal **e(t)**) to the input of circuit 3, by which they are amplified to produce a recording current **I**_{**r**} proportional to the input signal supplied to head 12. On account of the form of the transfer function of group 20, the harmonic components of signal **e(t)** of a frequency close to cutoff frequency **f**_{**T**} (0.5 Hz in the embodiment shown) undergo a considerable phase shift as compared with those of a frequency much higher (e.g. a decade higher) than cutoff frequency **f**_{**T**}, so that the harmonic components of a frequency much higher than cutoff frequency **f**_{**T**} are recorded on tape 13 with no noticeable variation in phase, whereas those of signal **e(t)** of a frequency close to cutoff frequency **f**_{**T**} are recorded on tape 13 with a phase shift **Δ(ω)**.

At the end of the recording, tape 13 is not rewound, is loaded onto reproducing device 22, and is reproduced at the same speed **ν** as for recording but in the opposite feed direction, so that amplifying circuit 26 is supplied with a time-varying signal in which the time variable is opposite in sign (negative) to that (positive) of the original signal **e(t)**. Moreover, as the transfer functions of groups 44 and 20 have substantially the same pattern - in particular, groups 20 and 44 have the same cutoff frequency **f**_{**T**} - the phase shifts **Δ(ω)** introduced during recording by group 20 correspond, during reproduction and for the corresponding harmonic components, to phase shifts **-Δ(ω)** produced by group 44 and of substantially the same absolute value but opposite in sign on account of the sign inversion of the time variable, so that the phase shift of signal E(-t) at the output of amplifier 26 is substantially zero for all the harmonic components. As such, the phase shift introduced during recording of the electrocardiographic signal is compensated completely during reproduction, the phase content of the signal E(-t) supplied to converting circuit 38 is the same as that of electrocardiographic signal **e(t)**, and, by virtue of eliminating the phase shift of the harmonic components, the output signal is of the same form as the input signal (with the exception of the time inversion).

As the time pattern of the signal supplied to converting circuit 38 is obviously inverted with respect to the original signal ("negative" time), signal E(-t) may be digitized and memorized in successive memory cells, which may be read by microprocessor 40 in a read direction opposite to the recording direction to recover inversion of the time variable.

In an alternative embodiment, the signal is recorded at speed **ν** by a recording device with a cutoff frequency **f**_{**T**} as in the Figure 1 embodiment, but is reproduced, again in the opposite feed direction to recording, at a speed increased by a factor **κ** i.e. at speed **- κ ν**, so that, on account of the increase in reproduction speed, all the harmonics of the tape recorded signal are "shifted" by a factor **κ** i.e. the original frequency value of each harmonic is increased **κ** times.

As a result, reproducing device 22 performs a high-pass (pole-zero) transfer function **H**_{**κ**}**(ω)** of a substantially constant value **H**_{**0**} above a cutoff frequency **κf**_{**T**}, i.e. the cutoff frequency of transfer function **H**_{**κ**}**(ω)** is **κ** times greater than that of group 20.

The value of transfer function **H**_{**κ**}**(ω)** decreases steadily by 20 decibels per decade from cutoff frequency **κf**_{**T**} towards the lower frequencies.

Clearly, changes may be made to the recording and reproducing devices implementing the method described without, however, departing from the scope of the present invention.

## Claims

1. An electrocardiographic signal processing method comprising the steps of:
- recording (3, 12) an electrocardiographic input signal (**e(t)**) on a magnetic tape (13) by means of a recording device (20) having a predetermined transfer function (**H(ω)**); and
- reproducing (24, 26) the tape recorded signal by means of a reproducing device (44) having a predetermined transfer function (**H(ω)**) to generate an output signal (E(-t));
characterized in that the transfer functions (**H(ω)**) of said recording device (20) and said reproducing device (44) have the same pattern;
said magnetic tape (13) being fed, at said reproducing step, in the opposite direction to that of said recording step, so that any phase shifts (**Δ(ω)**) introduced at the recording step in the harmonic components of the input signal (**e(t)**) correspond, at the reproducing step and for corresponding harmonic components, to phase shifts (**-Δ(ω)**) produced by the reproducing device (44) and of substantially the same absolute value but opposite in sign, so that the phase shift of the output signal is substantially zero for all the harmonic components of the output signal.

2. A method as claimed in Claim 1, characterized in that said step of recording an electrocardiographic input signal (**e(t)**) on a magnetic tape (13) comprises the substeps of:
- acquiring (5) said electrocardiographic signal and supplying it to first amplifying means (3) generating at the output (3u) a recording current (**I**_{**r**}) proportional to the input signal;
- recording (12) said magnetic tape (13) by supplying (10) said recording current (**I**_{**r**}) to magnetic recording means (12) cooperating with said magnetic tape (13); the group (20) comprising said first amplifying means (3) and said magnetic recording means (12) performing said transfer function of said recording device.

3. A method as claimed in Claim 1 or 2, characterized in that said step of reproducing (24, 26) the recorded signal comprises the substeps of:
- reading said magnetic tape by means of magnetic reading means (24) to generate a signal which is supplied to second amplifying means; and picking up the output signal of said second amplifying means;
the group (44) comprising said second amplifying means (26) and said magnetic reading means (24) performing said transfer function of said reproducing device.

4. A method as claimed in any one of the foregoing Claims, characterized in that the transfer functions (**H(ω)**) of said recording device (20) and said reproducing device (44) are of the high-pass type and have substantially the same cutoff frequencies; said magnetic tape (13) being fed, at said reproducing step, at the same speed as that of said recording step and in the opposite direction to that of said recording step.

5. A method as claimed in any one of the foregoing Claims from 1 to 3, characterized in that the transfer function (**H(ω)**) of said reproducing device (44) is of the high-pass type and has a cutoff frequency (**κf**_{**T**}) which is a multiple (**κ**) of the cutoff frequency (**f**_{**T**}) of the transfer function of said recording device; said magnetic tape being fed, at said reproducing step, at a speed (**κν**) which is a multiple (**κ**) of the speed (**ν**) at which said tape is fed at said recording step.

6. An electrocardiographic signal processing device comprising:
- a recording device (20) having a predetermined transfer function (**H(ω)**) and for recording (3, 12) an electrocardiographic input signal (**e(t)**) on a magnetic tape (13); and
- a reproducing device (44) having a predetermined transfer function (**H(ω)**) and for reproducing (24, 26) the tape recorded signal to generate an output signal (E(-t));
characterized in that the transfer functions (**H(ω)**) of said recording device (20) and said reproducing device (44) have the same pattern;
said magnetic tape (13) being fed, at said reproducing step, in the opposite direction to that of said recording step, so that any phase shifts (**Δ(ω)**) introduced at the recording step in the harmonic components of the input signal (**e(t)**) correspond, at the reproducing step and for corresponding harmonic components, to phase shifts (**-Δ(ω)**) produced by the reproducing device (44) and of substantially the same absolute value but opposite in sign, so that the phase shift of the output signal is substantially zero for all the harmonic components of the output signal.

7. A device as claimed in Claim 6, characterized in that said recording device (20) comprises:
- first amplifying means (3) receiving at the input said electrocardiographic signal, and generating at the output (3u) a recording current (**I**_{**r**}) proportional to the input signal; and
- magnetic recording means (12) receiving said recording current (**I**_{**r**}) to record said magnetic tape (13);
the group (20) comprising said first amplifying means (3) and said magnetic recording means (12) performing said transfer function of said recording device.

8. A device as claimed in Claim 6 or 7, characterized in that said reproducing device comprises:
- magnetic reading means (24) for reading said magnetic tape to generate a read signal; and
- second amplifying means receiving said read signal to generate said output signal;
the group (44) comprising said second amplifying means (26) and said magnetic reading means (24) performing said transfer function of said reproducing device.

9. A device as claimed in any one of the foregoing Claims from 6 to 8, characterized in that the transfer functions (**H(ω)**) of said recording device (20) and said reproducing device (44) are of the high-pass type and have substantially the same cutoff frequencies; said magnetic tape (13) being fed by said reproducing device at the same speed as by said recording device and in the opposite direction to that employed when recording the tape.

10. A device as claimed in any one of the foregoing Claims from 6 to 8, characterized in that the transfer function (**H(ω)**) of said reproducing device (44) is of the high-pass type and has a cutoff frequency (**κf**_{**T**}) which is a multiple (**κ**) of the cutoff frequency (**f**_{**T**}) of the transfer function of said recording device; said magnetic tape being fed by said reproducing device at a speed (**κν**) which is a multiple (**κ**) of the speed (**ν**) at which said tape is fed by said recording device at said recording step.
